# EUROPEAN PATENT SPECIFICATION

(11) **EP 3 575 925 B1**
(45) Date of publication and mention of the grant of the patent: **30.12.2020**
(21) Application number: 18183801.2
(22) Date of filing: 16.07.2018
(51) Int. Cl.: G06F 3/01, H04L 12/24

(54) **NETWORK DEVICE MODIFICATIONS VIA AUGMENTED REALITY USER INTERFACES**
NETZWERKVORRICHTUNGSMODIFIKATIONEN ÜBER BENUTZEROBERFLÄCHEN MIT ERWEITERTER REALITÄT
MODIFICATIONS DE DISPOSITIF DE RÉSEAU PAR L'INTERMÉDIAIRE D'INTERFACES UTILISATEUR À RÉALITÉ AUGMENTÉE

(30) Priority: 01.06.2018 IN 201841020695
(43) Date of publication of application: 04.12.2019
(73) Proprietor: Hewlett Packard Enterprise Development LP, Houston, TX 77070 (US)
(72) Inventor: ROY, Tathagata, 560103 Bangalore (IN); PARANGATTIL, Praveen Krishnakumar, 560103 Bangalore (IN); BAPAT, Dheeraj, 560103 Bangalore (IN)
(74) Representative: Haseltine Lake Kempner LLP

(56) References cited:
- WO-A1-2018/059934
- US-A1- 2016 330 295
- US-A1- 2017 310 542

## Description

### BACKGROUND

Networks of enterprises or large corporations can span several different buildings, campuses, and/or geographic locations. These large networks can deploy hundreds to thousands of different network devices that are all interconnected to maintain a network of the enterprise. The network devices may have several different physical connections with Ethernet cables to various different ports.

Some further background information can be found in WO2018/059934A1, US2016/330295A1 and US2017/310542A1.

### SUMMARY

The objectives of the present invention are achieved through the subject-matter of the independent claims 1, 6 and 10, respectively claiming an apparatus, a method and a non-transitory computer readable storage medium. Preferred embodiments are set out in the dependent claims.

### BRIEF DESCRIPTION OF THE DRAWINGS

FIG. 1 is a block diagram of an example system of the present disclosure;
FIG. 2 is a block diagram of an apparatus with an augmented reality user interface to modify a network device of the present disclosure;
FIG. 3 is a series of screen shots of the augmented reality user interface of the present disclosure;
FIG. 4 is a flow chart of an example method for modifying a network device via an augmented reality user interface; and
FIG. 5 is a block diagram of an example non-transitory computer readable storage medium storing instructions executed by a processor.

### DETAILED DESCRIPTION

Examples described herein provide an augmented reality (AR) user interface (Ul) to modify network devices and an apparatus for providing the same. The AR UI may provide an efficient interface for troubleshooting malfunctioning network devices that are managed by a network management system (NMS). A technician may be overwhelmed when walking into a server room to try and connect a malfunctioning network device. The server room may include racks and racks of servers with hundreds of different physical connections between different ports of different servers. Some of the physical connections may run to servers that are at different physical locations.

The AR UI may also provide images to the NMS. The images may provide information that can be logged by the NMS related to why a network device is malfunctioning. For example, the image of the server rack may show a cable has been disconnected from a particular port on a server. The NMS may determine the cause of the malfunction based on the received image. Further, the NMS may not know what the cause of the malfunction is without the image. Thus, the AR UI may provide images to the NMS to improve troubleshooting.

In addition, the AR UI may provide an overlay view. For example, the technician may receive a notification from an NMS that a particular virtual local area network (VLAN) is malfunctioning (e.g., misconfigured). The AR UI may be used to identify each port and cable within a server room that is configured to the particular VLAN that is misconfigured. Thus, the technician may quickly check the appropriate ports and connections associated with the particular VLAN that is misconfigured.

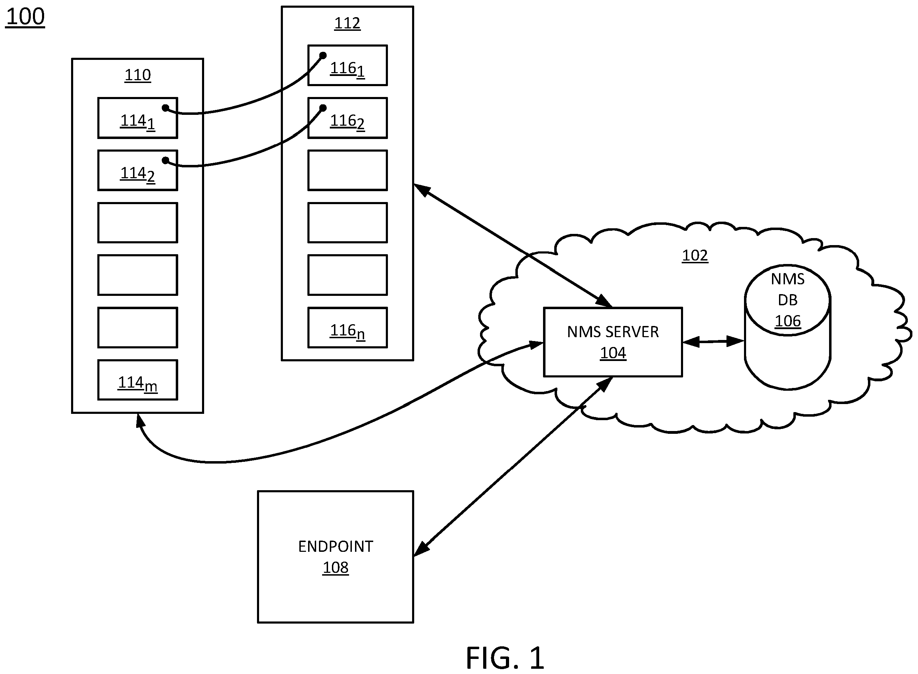

FIG. 1 illustrates an example system 100 of the present disclosure. In one example, the system 100 may include an Internet protocol (IP) network 102. It should be noted that the IP network 102 has been simplified for ease of explanation. The IP network 102 may include additional devices that are not shown. For example, the IP network 102 may include switches, firewalls, access points, access networks, and the like.

The IP network 102 may include a NMS server 104 and an NMS database (DB) 106 that are communicatively coupled to each other. The NMS server 104 may be in communication with an endpoint 108 and network devices 114₁ - 114ₘ (hereinafter also referred to individually as a network device 114 or collectively as network devices 114) at a location 110 and network devices 116₁ - 116ₙ (hereinafter also referred to individually as a network device 116 or collectively as network devices 116) at a location 112. The locations 110 and 112 may be different locations within a building, different buildings, different geographic locations, and the like. In one example, locations 110 and 112 may correspond to different branches of an enterprise network. In another example, location 110 may correspond to a central campus, whereas location 112 may correspond to a branch location. Although two different locations 110 and 112 are illustrated in FIG. 1, it should be noted that any number of locations may be in communication with the NMS server 104.

The network devices 114 and 116 may be any type of network device. For example, the network devices may be access points, routers, switches, servers, sensors, beacons, and the like. In one example, the network devices 114 and 116 may be network switches or blade servers having a plurality of ports. The network devices 114 and 116 may be connected to other network devices 114 and 116 via connections of the ports.

In one example, the network devices 114 and 116 may be managed and monitored by the NMS server 104. The NMS server 104 may manage the network devices 114 and 116 by remotely making configuration changes and may monitor the network devices 114 and 116 by detecting when a network device is malfunctioning, misconfigured, or underperforming.

The NMS server 104 may include a processor and memory storing instructions executed by the processor to execute the functions described herein. In one example, the NMS server 104 may include an AR UI generator. For example, the NMS server 104 may add graphical representations of network device information on an actual image captured and displayed by the endpoint device 108, as discussed in further details below.

In one example, information associated with each one of the network devices 114 and 116 may be stored in the NMS DB 106. The information may include an identification of the network device (e.g., a media access control (MAC) identification (ID) number, a name, an identification number, and the like), a location, port information (e.g., connected port numbers, active port numbers, port connection information, identification information of which ports on other network devices that the ports are connected to, and the like), configuration parameters associated with the network device, activity logs, and the like.

The endpoint 108 may be any type of portable endpoint with a display. For example, the endpoint 108 may be a smartphone, a tablet computer, a virtual reality (VR) system, and the like.

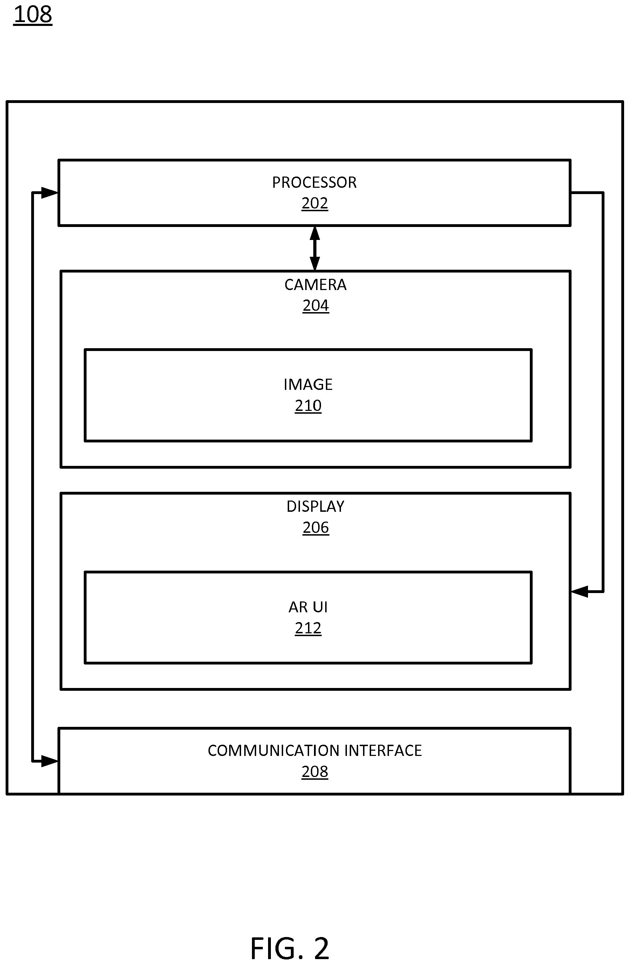

FIG. 2 illustrates a block diagram of an example endpoint 108. In one example, the endpoint 108 may include a processor 202, a camera 204, a display 206, and a communication interface 208. The processor 202 may be communicatively coupled to the camera 204, the display 206, and the communication interface 208.

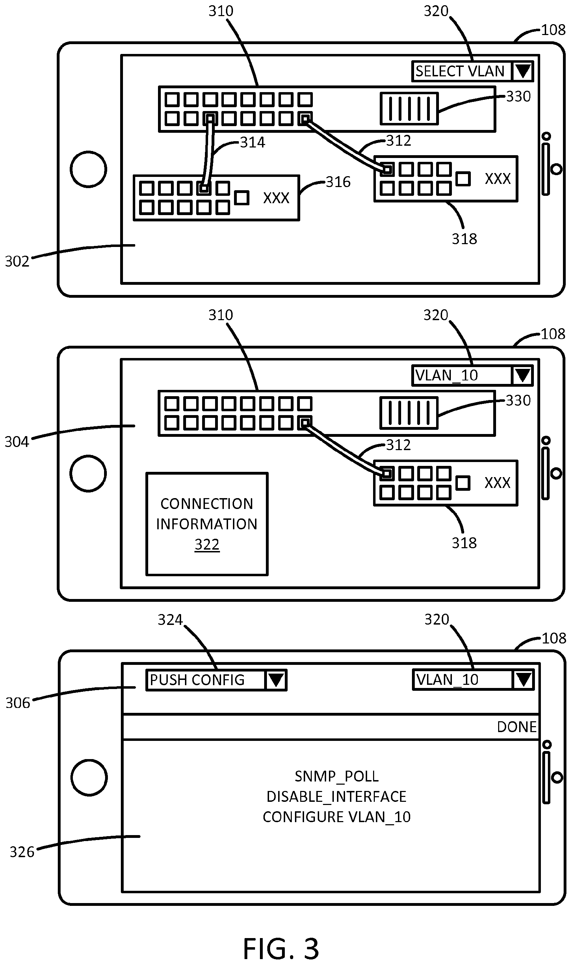

In one example, the camera 204 may be used to capture an image 210. The image 210 may be a video image of the network devices 114 or 116. The image 210 may be shown on the display 206 as part of the augmented reality (AR) user interface (Ul) 212 that is generated and displayed. For example, additional graphical images, or a graphical overlay, transmitted by the NMS server 104 may be displayed over the image 210 captured by the camera 204. Examples of the AR UI 212 are illustrated in FIG. 3, and discussed below.

In one example, the AR UI 212 of the endpoint 108 may be used to troubleshoot network devices 114 and/or 116. In addition, the AR UI 212 of the endpoint 108 may be used to make a modification to the network devices 114 and/or 116. The modification may be a change to a value of a configuration parameter (e.g., port settings, security settings, control parameters, and the like), a control signal to initiate an operation (e.g., a power cycle, a test procedure, and the like), a reset operation, and the like.

In one example, the communication interface 208 may establish a wired or wireless communication session with the NMS server 104 via the IP network 102. The endpoint 108 may transmit the image 210 to the NMS server 104 to identify the network device 114 or 116 in the image 210 via the communication interface 208. The NMS server 104 may transmit the graphical overlays for the AR UI 212 via the communication interface 208.

FIG. 3 illustrates example screenshots 302, 304, and 306 of the AR UI 212. In one example, the AR UI 212 may be used to diagnose and troubleshoot malfunctioning network devices 114 and 116. For example, in the screenshot 302 the image 310 may be a real image of an actual network device (e.g., the network device 114₁ at location 110). The images 312, 314, 316, and 318 may be graphical overlays that are generated and transmitted to the endpoint 108 from the NMS server 104. The images 312 and 314 may be connection graphics. The images 316 and 318 may be graphical representations of other network devices 114 and/or 116 that are connected to ports of the actual network device of the image 310.

For example, a user may get a notification that the network device of the image 310 is malfunctioning. In the example illustrated in FIG. 3, the network device may be a switch or server with ports and the malfunction may be a misconfiguration of a VLAN for certain ports and/or connections. In another example, malfunctioning network devices or particular connections can be shown in the AR UI via a color coding. For example, malfunctioning connections may be shown in red and properly operating connections can be shown in green.

The user may take the endpoint 108 to a location where the network device of the image 310 is located. The user may capture an image of the network device and transmit the image to the NMS server 104. The NMS server 104 may identify the network device in the image based on optical character recognition analysis of the image containing the identification information of the network device.

In another example, a bar code 330 may be scanned and transmitted to the NMS server 104. The bar code 330 may contain identification information of the network device in the image 310. The bar code 330 may be a quick response code, a standard bar code, and the like.

Based on the identification of the network device in the image 310, the NMS server 104 may access the NMS DB 106 to determine which ports are active and the connection information associated with each active port. Based on the connection information, the NMS server 104 may generate the graphical overlay based on the connection information and transmit the graphical overlay to the endpoint 108 for the AR UI 212.

In one example, the NMS server 104 may include a graphical processor unit (GPU) that can execute machine learning artificial intelligence (Al) to identify the connections. For example, the image of network devices may be sent to the NMS server 104. The GPU of the NMS server 104 may compare the image to previously stored images of the network device and the associated connections. The NMS server 104 may determine if any new connections or activated ports on the network device are detected based on the comparison. If new connections are detected, the NMS server 104 may communicate with the network device over the IP network 102 to obtain the current connection information and configuration information associated with the new connections.

For example, a technician may have tried to create additional connections recently. However, the connections may have not been configured correctly. Thus, the NMS DB 106 may not have images or information associated with the recently added connections. However, the NMS server 104 may still be able to identify the connections in real-time using the GPU machine learning AI to analyze the received images and generate the current graphical overlay for the image of the network device 310 that is received.

The images 312, 314, 316, and 318 may be graphical representations of the connections to other network devices identified by the NMS server 104. The network devices of the images 316 and 318 may be in the same cabinet, a different cabinet in the same location, in a different building at the same location, at a different geographic location, and the like.

Although a single network device is represented for each active port in screenshot 302, it should be noted that any number of connections and network devices can be displayed for each active port. For example, if an active port has a chain or a series of three connections to other network devices, the screenshot 302 may display graphical representations of each connection to each of the other network devices. In other words, each connection of an active port may be shown in the AR UI 212 until an endpoint is reached in the series of connections.

In one example, a drop down menu 320 may also be displayed in the AR UI 212 as illustrated in the screenshot 302. The drop down menu 320 may allow the user to select a particular group of network devices or a subset of ports based on a particular grouping. For example, the user may know that a particular virtual local area network (VLAN) is misconfigured or producing excessive errors. The drop down menu 320 may allow the user to select the particular VLAN.

The screenshot 304 illustrates when a particular VLAN is selected in the drop down menu 320. For example, VLAN_10 may be selected. The AR UI 212 may then show those active ports associated with the VLAN_10 (e.g., the graphical images 312 and 318). In one example, the other connections (e.g., the graphical images 314 and 316) may be removed. In one example, the other connections (e.g., the graphical images 314 and 316) that are not associated with the selected VLAN may be greyed out or have a different color.

In addition, the screenshot 304 may automatically display connection information 322. For example, the AR UI 212 may obtain the connection information 322 from the NMS server 104 that is retrieved from the NMS DB 106. With the connection information 322 and the graphical overlay images 312 and 318 of the connection and network devices, respectively, the user may diagnose and troubleshoot the misconfigured network device in the image 310.

In one example, the user may have believed that the connection 314 should also have been associated with the VLAN_10. Thus, the user may determine that the connection 314 has been misconfigured. The user may use the AR UI 212 to modify the network device in the image 310 to correctly configure the connection 314 to be part of the VLAN_10.

In one example, after the user has determined how to remediate or correct the misconfigured network device in the image 310, the user may call up a drop down menu 324. The drop down menu 324 may provide options for modifying the network device. In one example, the options 326 may include an simple network management protocol (SNMP) poll option, a disable interface option, a configure VLAN option, and the like. In another example, the user may be provided with an interface that allows the user to prove specific values for various configuration parameters.

The modifications to the network devices (either selected from the drop down menu 324, or a user interface that allows specific values to be entered for different configuration parameters, may be transmitted to the NMS server 104. The modifications transmitted to the NMS server 104 may cause the NMS server 104 to implement the modifications to the network devices. For example, if the image 310 was of the network device 114₁, the NMS server 104 may modify the network device 114₁ in accordance with the modifications received from the endpoint 108.

In one example, after the modifications are implemented by the NMS server 104, the screenshot 304 may be updated to also show the connection 314. In other words, after the connection 314 is correctly configured through the AR UI 212, the connection 314 may correctly appear when the VLAN_10 ports are selected in the drop down menu 320.

Although FIG. 3 illustrates screenshots 302, 304, and 306 of the AR UI 212 showing one network device, it should be noted that the AR UI 212 may display multiple network devices. For example, the network devices 114 may be blade servers in a server rack. The user may want to know which ports are associated with a particular VLAN. The user may point the camera 204 at an entire server rack of network devices 114 and capture an image of all of the network devices 114.

The image may be transmitted to the NMS server 104 and the NMS server 104 may identify each network device 114 and the ports of each network device 114 associated with the desired VLAN. The graphical overlays may simply be a color coded image over the particular ports. The AR UI 212 may then display the color coded image over the ports of each network device 114 that are associated with the desired VLAN. In one example, as the user moves closer to a particular network device 114, the connection information 322 may be displayed as shown in the screenshot 304, and discussed above.

Thus, the AR UI 212 provides an efficient interface to troubleshoot network devices. In addition, the AR UI 212 may be used to make modifications to the network devices to correct or remediate any malfunctioning network devices. For example, the network devices being viewed in the AR UI 212 may be modified via the AR UI 212, as described above. As a result, the user does not need to access the NMS server 104 directly to modify the malfunctioning network devices.

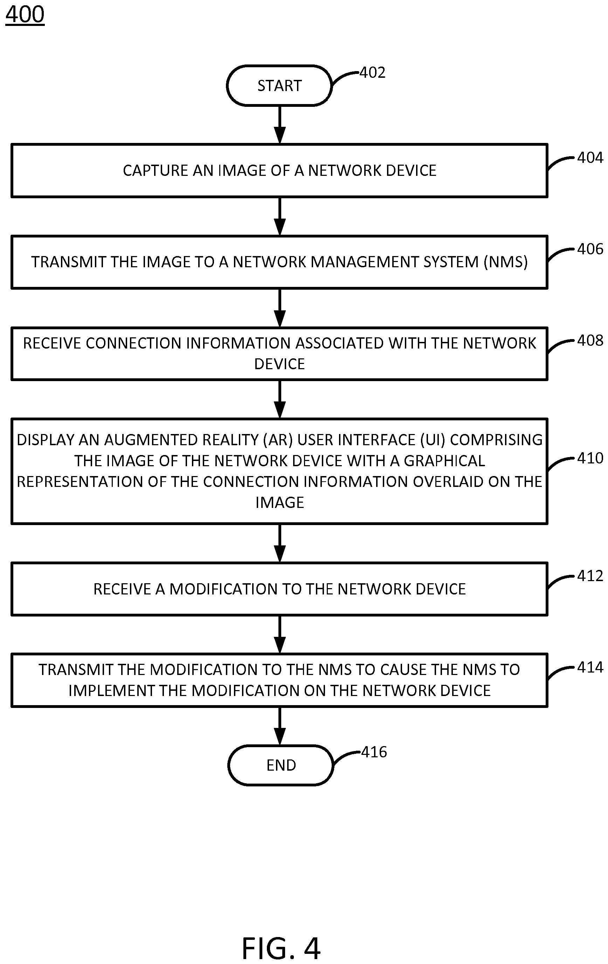

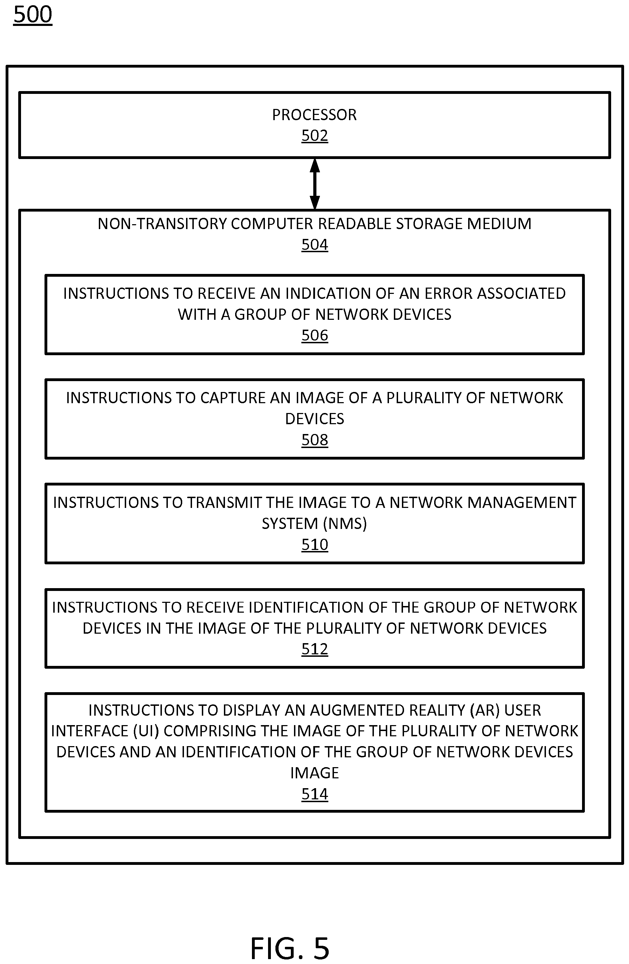

FIG. 4 illustrates a flow diagram of an example method 400 for modifying a network device via an augmented reality user interface. In an example, the method 400 may be performed by the endpoint device 108 or the apparatus 500 illustrated in FIG. 5 and described below.

At block 402, the method 400 begins. At block 404, the method 400 captures an image of a network device. For example, a camera of the endpoint device may be pointed at a network device to capture an image of the network device. The image may be a video image that is displayed on the display of the endpoint device.

At block 406, the method 400 transmits the image to a network management system (NMS). The image may be used by the NMS to identify the network device in the image. In one example, the NMS may use an optical character recognition process to read identification information written on the network device and shown in the image. In another example, a bar code that contains information associated with the network device may be contained in the image and read by the NMS.

In another example, the NMS may use a GPU to execute machine learning AI to analyze the image. As discussed above, the NMS may identify the connections and connection information in real-time by comparing the image with previously stored images of the network device. Based on a comparison of the images, the NMS may detect new connections and communicate with the network device to obtain the connection information.

At block 408, the method 400 receives connection information associated with the network device. In one example, the NMS may obtain connection information associated with the network device that is identified in the image form an NMS DB. The connection information may include port numbers, a port number of a connected network device, data associated with the connection, and the like.

At block 410, the method 400 displays an augmented reality (AR) user interface (UI) comprising the image of the network device with a graphical representation of the connection information overlaid on the image. In one example, the NMS may generate the graphical representations associated with the connection information. The graphical representations may be an image of the connected network devices, an image of the cable creating the connection, a color coding of the cable (e.g., showing whether the connection is detected or down), and the like. The graphical representations may be overlaid on the image of the actual network device captured by the endpoint to create the AR UI. The graphical representation of the connection information may comprise an image of additional network devices connected to the network device and an image of physical cables connected to labeled ports in the network device to labeled ports in the additional network devices.

At block 412, the method 400 receives a modification to the network device. For example, based on the connection information and the graphical representations displayed on the AR UI, a user or technician may diagnose a malfunctioning network device. Based on the diagnosis, the user or technician may implement corrective actions or modifications to the network device. The modifications may be entered in the AR UI displayed by the endpoint via drop down menus with predefined modifications based on the entered diagnosis, an interface where values for configuration changes can be entered in a field, and the like.

At block 414, the method 400 transmits the modification to the NMS to cause the NMS to implement the modification on the network device. For example, the NMS may connect to the malfunctioning network device via an IP network and implement the modifications. For example, the modifications may include different recovery procedures, changes to certain configuration parameters, and the like. The NMS may execute the recovery procedures or change the values of certain configuration parameters in accordance with the modifications received by the AR UI.

In one example, after the modifications are implemented by the NMS, the AR UI may be updated. The AR UI may change the color coding for previously malfunctioning network devices and/or ports. In one example, a graphical representation of all of the connected network devices may be shown in the AR UI to show how the modifications have affected all other connected network devices and/or ports. At block 416, the method 400 ends.

FIG. 5 illustrates an example of an apparatus 500. In an example, the apparatus 500 may be the NMS server 104 illustrated in FIG. 1. In an example, the apparatus 500 may include a processor 502 and a non-transitory computer readable storage medium 504. The non-transitory computer readable storage medium 504 may include instructions 506, 508, 510, 512, and 514 that, when executed by the processor 502, cause the processor 502 to perform various functions.

In an example, the instructions 506 may include instructions to receive an indication of an error associated with a group of network devices. The instructions 508 may include instructions to capture an image of a plurality of network devices. The instructions 510 may include instructions to transmit the image to a network management system (NMS). The instructions 512 may include instructions to receive identification of the group of network devices in the image of the plurality of network devices. The instructions 514 may include instructions to display an augmented reality (AR) user interface (Ul) comprising the image of the plurality of network devices and an identification of the group of network devices image. In some examples, the group of network devices are part of a virtual local area network (VLAN).

## Claims

1. An apparatus (100), comprising:
a camera to capture an image of a network device;
a communication interface to transmit the image of the network device to a network management system, NMS, and receive information associated with the network device, wherein the information comprises connection information comprising additional network devices that are connected to the network device;
a display to present an augmented reality, AR, user interface, UI, that includes a graphical overlay of the information on the image of the network device that is captured; and
a processor communicatively coupled to the camera, the communication interface, and the display, the processor is adapted to receive a modification of the network device and transmit the modification to the NMS over the communication interface to cause the NMS to implement the modification in the network device;
wherein the processor is further adapted to receive a modification to one of the additional network devices that are in a different location than the network device in the image that is captured, and transmit the modification to the additional network device to the NMS over the communication interface, to cause the NMS to implement the modification in the additional network device.

2. The apparatus of claim 1, wherein the image comprises a barcode that contains identification information of the network device.

3. The apparatus of claim 1, wherein the AR UI automatically updates displayed information associated with the network device in the AR UI as the camera moves to capture different images of different network devices.

4. The apparatus of claim 1, wherein the modification comprises a change in value of a parameter of the network device and/or the modification comprises a control signal to initiate an operation on the network device.

5. The apparatus of claim 1, wherein the modification comprises a control signal to initiate an operation on the network device and the operation comprises a reset operation.

6. A method (400), comprising:
capturing, by a processor, an image of a network device;
transmitting, by the processor, the image to a network management system, NMS;
receiving, by the processor, connection information associated with the network device, wherein the connection information comprising additional network devices that are connected to the network device;
displaying, by the processor, an augmented reality, AR, user interface, UI, comprising the image of the network device with a graphical representation of the connection information overlaid on the image;
receiving, by the processor, a modification to the network device; and
transmitting, by the processor, the modification to the NMS to cause the NMS to connect to the malfunctioning network device via an IP network and implement the modification on the network device;
receiving, by the processor, a modification to one of the additional network devices, that are in a different location than the network device in the image that is captured; and
transmitting, by the processor the modification to the NMS to cause the NMS to connect to the malfunctioning network device via an IP network and implement the modification on the one of the additional network devices.

7. The method of claim 6, wherein the network device is a malfunctioning network device and the modification is to correct the malfunctioning network device.

8. The method of claim 6, wherein the modification comprises changing a value of a parameter of the network device and/or the modification comprises a control signal to initiate an operation on the network device.

9. The method of claim 6, wherein the one of the additional network devices is in a different physical location than the network device.

10. A non-transitory computer readable storage medium encoded with instructions executable by a processor, to cause the processor to perform the method of any of claims 6 to 9, when executed by the processor.

## Patentansprüche

1. Einrichtung (100), die Folgendes umfasst:
eine Kamera, um ein Bild einer Netzwerkvorrichtung aufzunehmen;
eine Kommunikationsschnittstelle, um das Bild der Netzwerkvorrichtung an ein Netzwerkverwaltungssystem (*Network Management System* - NMS) zu übermitteln und Informationen, die der Netzwerkvorrichtung zugeordnet sind, zu empfangen, wobei die Informationen Verbindungsinformationen umfassen, die zusätzliche Netzwerkvorrichtungen umfassen, die mit der Netzwerkvorrichtung verbunden sind;
eine Anzeige, um eine Erweiterte-Realität(*Augmented Reality*- AR)-Benutzeroberfläche(*User Interface* - UI) darzustellen, die eine grafische Überlagerung der Informationen auf dem Bild der Netzwerkvorrichtung, das aufgenommen wird, beinhaltet; und
einen Prozessor, der mit der Kamera, der Kommunikationsschnittstelle und der Anzeige kommunikativ gekoppelt ist, wobei der Prozessor angepasst ist, um eine Modifikation der Netzwerkvorrichtung zu empfangen und die Modifikation über die Kommunikationsschnittstelle an das NMS zu übermitteln, um das NMS zu veranlassen, die Modifikation in die Netzwerkvorrichtung zu implementieren;
wobei der Prozessor ferner angepasst ist, um eine Modifikation an einer der zusätzlichen Netzwerkvorrichtungen zu empfangen, die sich an einem anderen Ort als die Netzwerkvorrichtung in dem aufgenommenen Bild befinden, und die Modifikation an der zusätzlichen Netzwerkvorrichtung über die Kommunikationsschnittstelle an das NMS zu übermitteln, um das NMS zu veranlassen, die Modifikation in die zusätzliche Netzwerkvorrichtung zu implementieren.

2. Einrichtung nach Anspruch 1, wobei das Bild einen Barcode umfasst, der Identifikationsinformationen der Netzwerkvorrichtung enthält.

3. Einrichtung nach Anspruch 1, wobei die AR-UI angezeigte Informationen, die der Netzwerkvorrichtung in der AR-UI zugeordnet sind, automatisch aktualisiert, während sich die Kamera bewegt, um unterschiedliche Bilder unterschiedlicher Netzwerkvorrichtungen aufzunehmen.

4. Einrichtung nach Anspruch 1, wobei die Modifikation eine Wertänderung eines Parameters der Netzwerkvorrichtung umfasst und/oder die Modifikation ein Steuersignal umfasst, um einen Vorgang an der Netzwerkvorrichtung zu initiieren.

5. Einrichtung nach Anspruch 1, wobei die Modifikation ein Steuersignal umfasst, um einen Vorgang an der Netzwerkvorrichtung zu initiieren, und der Vorgang einen Rücksetzvorgang umfasst.

6. Verfahren (400), das Folgendes umfasst:
Aufnehmen, durch einen Prozessor, eines Bildes einer Netzwerkvorrichtung;
Übermitteln, durch den Prozessor, des Bildes an ein Netzwerkverwaltungssystem (NMS);
Empfangen, durch den Prozessor, von Verbindungsinformationen, die der Netzwerkvorrichtung zugeordnet sind, wobei die Verbindungsinformationen zusätzliche Netzwerkvorrichtungen, die mit der Netzwerkvorrichtung verbunden sind, umfassen;
Anzeigen, durch den Prozessor, einer Erweiterte-Realität(AR)-Benutzeroberfläche(UI), die das Bild der Netzwerkvorrichtung mit einer grafischen Darstellung der auf dem Bild überlagerten Verbindungsinformationen umfasst;
Empfangen, durch den Prozessor, einer Modifikation an der Netzwerkvorrichtung; und
Übermitteln, durch den Prozessor, der Modifikation an das NMS, um das NMS zu veranlassen, sich über ein IP-Netzwerk mit der fehlerhaft arbeitenden Netzwerkvorrichtung zu verbinden und die Modifikation an der Netzwerkvorrichtung zu implementieren;
Empfangen, durch den Prozessor, einer Modifikation an einer der zusätzlichen Netzwerkvorrichtungen, die sich an einem anderen Ort als die Netzwerkvorrichtung in dem aufgenommenen Bild befinden; und
Übermitteln, durch den Prozessor, der Modifikation an das NMS, um das NMS zu veranlassen, sich über ein IP-Netzwerk mit der fehlerhaft arbeitenden Netzwerkvorrichtung zu verbinden und die Modifikation an der einen der zusätzlichen Netzwerkvorrichtungen zu implementieren.

7. Verfahren nach Anspruch 6, wobei die Netzwerkvorrichtung eine fehlerhaft arbeitende Netzwerkvorrichtung ist und die Modifikation darin besteht, die fehlerhaft arbeitende Netzwerkvorrichtung zu korrigieren.

8. Verfahren nach Anspruch 6, wobei die Modifikation das Ändern eines Wertes eines Parameters der Netzwerkvorrichtung umfasst und/oder die Modifikation ein Steuersignal umfasst, um einen Vorgang an der Netzwerkvorrichtung zu initiieren.

9. Verfahren nach Anspruch 6, wobei sich die eine der zusätzlichen Netzwerkvorrichtungen an einem anderen physischen Ort als die Netzwerkvorrichtung befindet.

10. Nichtflüchtiges computerlesbares Speichermedium, das mit durch einen Prozessor ausführbaren Anweisungen codiert ist, um den Prozessor zu veranlassen, das Verfahren nach einem der Ansprüche 6 bis 9 durchzuführen, wenn es durch den Prozessor ausgeführt wird.

## Revendications

1. Appareil (100), comprenant :
un appareil photographique pour capturer une image d'un dispositif réseau ;
une interface de communication pour transmettre l'image du dispositif réseau à un système de gestion de réseau, NMS, et recevoir des informations associées au dispositif réseau, les informations comprenant des informations de connexion comprenant des dispositifs réseau supplémentaires qui sont connectés au dispositif réseau ;
un dispositif d'affichage pour présenter une interface utilisateur, IU, de réalité augmentée, RA, qui comporte une superposition graphique des informations sur l'image du dispositif réseau qui est capturée ; et
un processeur couplé en communication à l'appareil photographique, à l'interface de communication et au dispositif d'affichage, le processeur étant adapté pour recevoir une modification du dispositif réseau et transmettre la modification au NMS au-dessus de l'interface de communication afin d'amener le NMS à mettre en œuvre la modification dans le dispositif réseau ;
le processeur étant en outre adapté pour recevoir une modification de l'un des dispositifs réseau supplémentaires qui se trouvent dans un emplacement différent de celui du dispositif réseau dans l'image qui est capturée, et transmettre la modification du dispositif réseau supplémentaire au NMS au-dessus de l'interface de communication, afin d'amener le NMS à mettre en œuvre la modification dans le dispositif réseau supplémentaire.

2. Appareil selon la revendication 1, l'image comprenant un code à barres qui contient des informations d'identification du dispositif réseau.

3. Appareil selon la revendication 1, l'IU de RA mettant automatiquement à jour les informations affichées associées au dispositif réseau dans l'IU de RA lorsque l'appareil photographique se déplace pour capturer différentes images de différents dispositifs réseau.

4. Appareil selon la revendication 1, la modification comprenant un changement de valeur d'un paramètre du dispositif réseau et/ou la modification comprenant un signal de commande pour lancer une opération sur le dispositif réseau.

5. Appareil selon la revendication 1, la modification comprenant un signal de commande pour lancer une opération sur le dispositif réseau et l'opération comprenant une opération de réinitialisation.

6. Procédé (400), comprenant :
la capture, par un processeur, d'une image d'un dispositif réseau ;
la transmission, par le processeur, de l'image à un système de gestion de réseau, NMS ;
la réception, par le processeur, des informations de connexion associées au dispositif réseau, les informations de connexion comprenant des dispositifs réseau supplémentaires qui sont connectés au dispositif réseau ;
le dispositif d'affichage, par le processeur, d'une interface utilisateur, IU, de réalité augmentée, RA, comprenant l'image du dispositif réseau avec une représentation graphique des informations de connexion superposées sur l'image ;
la réception, par le processeur, d'une modification du dispositif réseau ; et
la transmission, par le processeur, de la modification au NMS afin d'amener le NMS à se connecter au dispositif réseau défaillant par l'intermédiaire d'un réseau IP et à mettre en œuvre la modification sur le dispositif réseau ;
la réception, par le processeur, d'une modification de l'un des dispositifs réseau supplémentaires, qui se trouvent dans un emplacement différent du dispositif réseau dans l'image qui est capturée ; et
la transmission, par le processeur, de la modification au NMS afin d'amener le NMS à se connecter au dispositif réseau défaillant par l'intermédiaire d'un réseau IP et à mettre en œuvre la modification sur l'un des dispositifs réseau supplémentaires.

7. Procédé selon la revendication 6, le dispositif réseau étant un dispositif réseau défaillant et la modification devant corriger le dispositif réseau défaillant.

8. Procédé selon la revendication 6, la modification comprenant le changement d'une valeur d'un paramètre du dispositif réseau et/ou la modification comprenant un signal de commande pour lancer une opération sur le dispositif réseau.

9. Procédé selon la revendication 6, l'un des dispositifs réseau supplémentaires se trouvant dans un emplacement physique différent de celui du dispositif réseau.

10. Support de stockage non transitoire lisible par ordinateur codé avec des instructions exécutables par un processeur, afin d'amener le processeur à exécuter le procédé selon l'une quelconque des revendications 6 à 9 lorsqu'il est exécuté par le processeur.
